# EUROPEAN PATENT APPLICATION

(11) **EP 4 462 934 A1**
(43) Date of publication of application: **13.11.2024**
(21) Application number: 22917745.6
(22) Date of filing: 05.01.2022
(51) Int. Cl.: H04W 74/06, H04W 72/00

(54) **COMMUNICATION METHOD AND COMMUNICATION APPARATUS**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2022/070358
(87) International publication number: WO 2023/130269

(57) **Abstract**

The present disclosure provides a communication method and a communication apparatus. The communication method may comprise: determining a polling frame, the polling frame comprising information for detecting available states of all station devices participating in a wireless local area network sensing measurement determined by an access point device; and sending the polling frame.

## Description

### TECHNICAL FIELD

The disclosure relates to the field of wireless communication technologies, and in particular, to a communication method and a communication device for a wireless local area network (WLAN).

### BACKGROUND

WLAN has characteristics of flexibility, mobility, and low cost. With the development of communication technology and the growth of user demand, research on the application of WLAN is gradually deepening. For example, research is currently being conducted on WLAN sensing, which is mainly used for location discovery, proximity detection, and presence detection in dense environments (home and enterprise environments).

### SUMMARY

Various embodiments of the present disclosure provide the following technical solution.

According to embodiments of the present disclosure, a communication method is provided. The communication method may include: determining a polling frame, wherein the polling frame includes information for detecting availabilities of all station devices participating in wireless local area network (WLAN) sensing measurement determined by an access point device; and sending the polling frame.

According to embodiments of the present disclosure, a communication method is provided. The communication method may include: receiving a polling frame from an access point device, wherein the polling frame includes information for detecting availabilities of all station devices participating in wireless local area network (WLAN) sensing measurement determined by the access point device; and sending a response frame for the polling frame.

According to embodiments of the present disclosure, a communication device is provided. The communication device may include: a processing module, configured to determine a polling frame, wherein the polling frame includes information for detecting availabilities of all station devices participating in wireless local area network (WLAN) sensing measurement determined by an access point device; and a transceiver module, configured to send the polling frame.

According to embodiments of the present disclosure, a communication device is provided. The communication device may include: a transceiver module, configured to receive a polling frame from an access point device, wherein the polling frame includes information for detecting availabilities of all station devices participating in wireless local area network (WLAN) sensing measurement determined by the access point device; and a processing module, configured to control the transceiver module based on the polling frame to send a response frame for the polling frame.

According to embodiments of the present disclosure, an electronic device is provided. The electronic device includes a memory, a processor, and a computer program stored on the memory and executable by the processor. The processor implements the method as described above when executing the computer program.

According to embodiments of the present disclosure, a computer readable storage medium is provided. The computer readable storage medium stores a computer program. The computer program implements the method described above when executed by a processor.

The technical solution provided in the exemplary embodiments of the present disclosure can improve and adapt to the needs of WLAN sensing.

### BRIEF DESCRIPTION OF THE DRAWINGS

By referring to the accompanying drawings to describe in detail the exemplary embodiments of the present disclosure, the above and other features of embodiments of the present disclosure will become clearer.
Fig. 1 illustrates an example method of WLAN sensing.
Fig. 2 is a schematic diagram illustrating a measurement process in a TB-based mode.
Fig. 3 is a flowchart of a communication method according to an exemplary embodiment.
Fig. 4 is a flowchart of determining a polling frame according to an exemplary embodiment.
Fig. 5 is a flowchart of another communication method according to an exemplary embodiment.
Fig. 6 is a block diagram of a communication device according to an exemplary embodiment.

### DETAILED DESCRIPTION

The following description with reference to the accompanying drawings are provided to assist in a comprehensive understanding of the various embodiments of the present disclosure limited by the accompanying claims and their equivalents. The various embodiments disclosed herein include various specific details, but these specific details are only considered exemplary. In addition, for clarity and conciseness, descriptions of well-known technologies, functions, and constructions can be omitted.

The terms and expressions used in this disclosure are not limited to written meanings, but are only used by the inventors to enable a clear and consistent understanding of this disclosure. Therefore, for those skilled in the art, the description of various embodiments disclosed herein is provided for illustrative purposes only, and not for limiting purposes.

It should be understood that unless the context clearly indicates otherwise, the singular forms "one", "a", "said", and "the" used here may also include plural forms. It should be further understood that the term "including" used in this disclosure refers to the presence of the described features, integers, steps, operations, elements, and/or components, but does not exclude the presence or addition of one or more other features, integers, steps, operations, elements, components, and/or their groups.

It will be understood that although the terms "first", "second", etc. may be used to describe various elements in this article, these elements should not be limited by these terms. These terms are only used to distinguish one element from another. Therefore, without departing from the teachings of the exemplary embodiments, the first element discussed below can be referred to as the second element.

It should be understood that when a component is referred to as "connected" or "coupled" to another component, it can be directly connected or coupled to other components, or there may be intermediate components present. In addition, the term "connection" or "coupling" used here may include wireless connection or wireless coupling. The term "and/or" or the expression "at least one/at least one of..." used here includes any and all combinations of one or more related listed items.

Unless otherwise defined, all terms used herein (including technical and scientific terms) have the same meaning as those generally understood by those skilled in the art to which this disclosure relates.

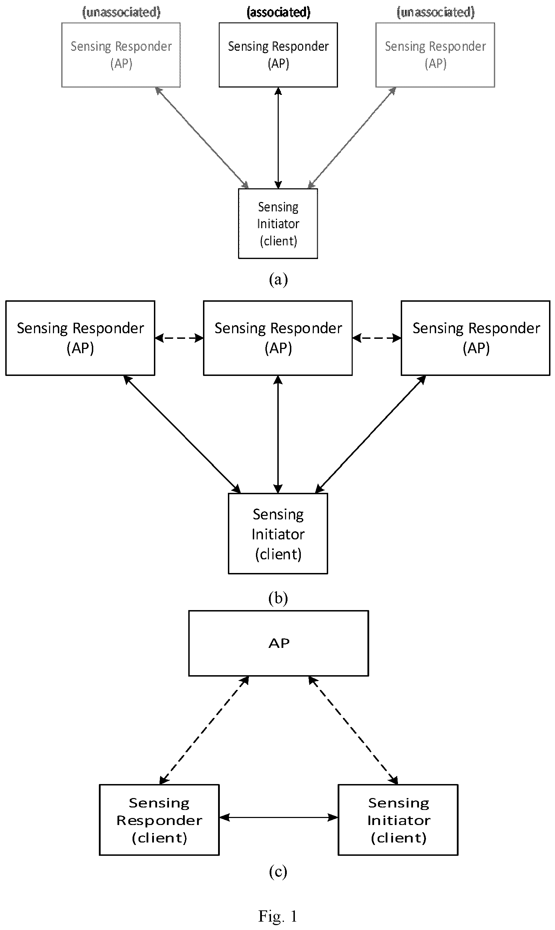

Fig. 1 illustrates an example method of WLAN sensing.

The process of WLAN sensing may be as follows: an initiator initiates WLAN sensing (for example, initiating a WLAN sensing session), and there may be multiple responders responding to it, the possible implementation of which may be as shown in (a), (b), and (c) in Fig. 1.

Referring to (a) in Fig. 1, when the WLAN sensing initiator (e.g. client) initiates WLAN sensing, multiple associated or unassociated WLAN sensing responders (e.g. three access points (APs)) can respond. The term "associated" here refers to an association connection established for communication between the initiator and the responder, while "unassociated" refers to an association connection not established for communication between the initiator and responder.

As an example, the client may include but is not limited to a cellular phone, smartphone, wearable device, computer, personal digital assistant (PDA), personal communication system (PCS) device, personal information manager (PIM), personal navigation device (PND), global positioning system, multimedia device, Internet of Things (IoT) device, etc.

The AP may be a wireless switch used for wireless networks or an access device for wireless networks. AP can include software applications and/or circuits to enable other types of nodes in the wireless network to communicate with the outside and inside of the wireless network through AP. As an example, the AP may be a terminal device or network device equipped with Wi-Fi (Wireless Fidelity) chips.

(b) in Fig. 1 is similar to (a) in Fig. 1, but in (b) in Fig. 1, communication can occur between the various responders (APs).

Referring to (c) in Fig. 1, both the WLAN sensing initiator and the WLAN sensing responder may be clients, and they can communicate by connecting to the same AP.

Although shown in (a), (b), and (c) of Fig. 1, the client serves as the initiator and the AP serves as the responder, this disclosure is not limited to this. For example, the AP may act as the initiator and the client may act as the responder. In addition, the number of initiators and responders is not limited to (a), (b), and (c) shown in Fig. 1.

As an illustrative embodiment, the process of WLAN sensing may include: WLAN sensing session setup, WLAN sensing measurement setup, and WLAN sensing measurement termination. In WLAN sensing session setup, the operation parameters associated with the sensing session can be determined and exchanged between devices. In the WLAN sensing measurement setup, sensing measurement and/or reporting measurement results can be performed, so the WLAN sensing measurement setup can also be referred to as the WLAN sensing measurement process. In WLAN sensing measurement termination, the device stops executing the measurement and terminates the sensing session.

In addition, in WLAN sensing technology, trigger based (TB-based) sensing and non-TB based sensing have been proposed. For example, in TB-based sensing, the AP may be the initiator or transmitter, and in Non-TB based sensing, the station (STA) may be the initiator or transmitter. The example of the station (STA) may be similar to the example of the client mentioned earlier. For simplicity, repeated descriptions are omitted here.

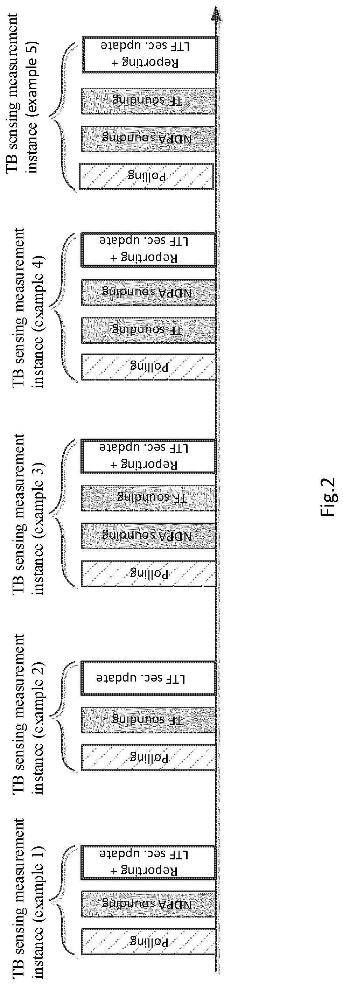

In the TB-based sensing, the WLAN sensing measurement process may include three stages: polling, measurement, and feedback, as shown in Fig. 2.

In Fig. 2, each of the TB sensing measurement instances (Examples 1 to 5) can represent the WLAN sensing measurement process and may include three stages: polling, measurement, and feedback. In the polling stage, the initiator (AP) can send a trigger frame (such as a polling frame) to check the availabilities of the responders (one or more STAs). If STA is available, it can report a response frame (e.g. CTS-to-self). In the measurement stage, NDPA (null data packet announcement) detection method (hereinafter referred to as "NDPA sounding" or "NDPA detection") and/or trigger frame detection method (hereinafter referred to as "TF sounding" or "TF detection") can be used. In the measurement and feedback stages, in the case of TF sounding, the initiator can send a TF frame (which can allocate resources to the responder), and then the responder can send a NDP frame to the initiator, so that the initiator can perform WLAN sensing measurements; in the case of NDPA sounding, there may be multiple receivers, and the initiator can send a NDPA frame, followed by a NDP frame, and afterwards, each responder can report to the initiator, to achieve WLAN sensing measurement. In addition, in the feedback stage, LTF (long training field) updates can also be performed.

However, in current research, the polling stage in the TB-based sensing is not yet perfect. For example, there is a lack of definition on the format and the transmission method (such as transmission bandwidth, transmission time point, etc.) of polling frame, which cannot meet the current needs of WLAN sensing.

In view of this, a communication method and a communication device according to embodiments of the present disclosure are proposed.

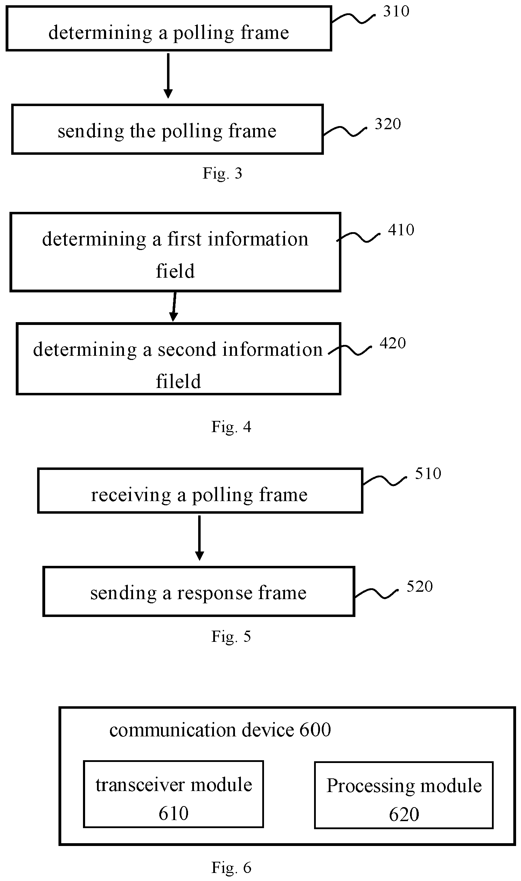

Fig. 3 is a flowchart of a communication method according to an exemplary embodiment. The communication method shown in Fig. 3 can be applied to the initiator of WLAN sensing (such as an access point device, hereinafter referred to as "AP").

Referring to Fig. 3, in step 310, a polling frame is determined, wherein the polling frame may include information for detecting availabilities of all station devices participating in WLAN sensing measurement determined by the access point device. That is to say, if the initiator determines the need for WLAN sensing measurement process, the information carried in the polling frame can be used to detect the presence of all stations participating in the WLAN sensing measurement process.

In embodiments of the present disclosure, the above information can be carried in the polling frame through explicit or implicit identification. For example, in the explicit identification method, the polling frame may have an identifier (ID) corresponding to the WLAN sensing session and WLAN sensing measurement setup (which can include multiple sensing measurement events); in the implicit identification method, the polling frame may be sent at the time points determined during the WLAN sensing measurement setup process for respective WLAN sensing measurement events, to determine whether the station devices participating in the corresponding WLAN sensing measurement event are available.

Specifically, Fig. 4 is a flowchart of a method for determining the polling frame in step 310 according to an exemplary embodiment.

Referring to Fig. 4, the method for determining the polling frame may include determining a first information field (step 410), wherein the first information field may be associated with WLAN sensing measurement. In other words, the information in the polling frame in step 310 may include the first information field associated with WLAN sensing measurement. For example, the first information field may include an identifier indicating the WLAN sensing measurement event, setup, and session determined by the AP. As a non-restrictive embodiment, the first information field may be the common information field in the polling frame, and for the convenience of description below, the first information field and the common information field may be exchanged.

In an embodiment of the present disclosure, the first information field may include an identifier for identifying at least one sensing measurement event in which the station device participates. That is to say, the WLAN sensing measurement determined by the AP may include at least one sensing measurement event, and the information carried in the polling frame (first information field) can identify the at least one sensing measurement event, thereby detecting the availability of the station participating in the identified at least one sensing measurement event. For example, if the corresponding station receiving the polling frame is available, it can continue with subsequent measurement and feedback stages.

For example, the first information field (the common information field of the polling frame) may have the format shown in Table 1 below.

**Table 1**

| | | |
|---|---|---|
| sensing measurement instance ID1 | sensing measurement instance ID2 | ... ... |

In Table 1, the identifier used to identify at least one sensing measurement event participated by the station device can be represented as the sensing measurement instance ID (sensing measurement instance ID1, sensing measurement instance ID2, etc.) in Table 1.

In another embodiment of the present disclosure, the first information field may include at least one sensing measurement setup identifier, and in this case, the first information field may also include an identifier for at least one sensing measurement event corresponding to each sensing measurement setup identifier. For example, a sensing measurement setup operation can correspond to one or more sensing measurement events. Referring to Fig. 2 for description, 5 sensing measurement events can be initiated through one sensing measurement setup operation, that is, 5 sensing measurement events can correspond to the same sensing measurement setup. However, this disclosure is not limited to this. Five sensing measurement events can be initiated through two or more sensing measurement setup operations.

According to this embodiment, the WLAN sensing measurement determined by the AP may include one or more sensing measurement setup operations, and each sensing measurement setup operation may correspond to one or more sensing measurement events. The information carried in the polling frame (first information field) can identify one or more sensing measurement setup operations and one or more sensing measurement events corresponding to each sensing measurement setup operation, thereby detecting the availabilities of the stations participating in one or more sensing measurement events under each identified sensing measurement setup operation.

For example, the first information field (the common information field of the polling frame) may have the format shown in Table 2 below.

**Table 2**

| | | | | | |
|---|---|---|---|---|---|
| measurement setup ID1 | sensing measurement instance ID11 | ...... | measurement setup ID2 | sensing measurement instance ID21 | ...... |

In Table 2, at least one sensing measurement setup identifier can be represented as the measurement setup ID (measurement setup ID1, measurement setup ID2, etc.) in Table 2, and the identifier of at least one sensing measurement event corresponding to the measurement setup ID "measurement setup ID1" can be represented as the sensing measurement instance ID 11, etc. in Table 2. The identifier of at least one sensing measurement event corresponding to the measurement setup ID "measurement setup ID2" can be represented as the sensing measurement instance ID21, etc. in Table 2.

The embodiment of Table 1 above can be understood as: the polling frame only identifies the identifier of at least one sensing measurement event belonging to the same sensing measurement setup identifier. In this case, the sensing measurement setup identifier in Table 2 can be omitted.

In another embodiment of the present disclosure, the first information field may include at least one sensing measurement session identifier, in which case the first information field may further include at least one sensing measurement setup identifier corresponding to each sensing measurement session identifier, and the identifier of at least one sensing measurement event corresponding to each sensing measurement setup identifier. For example, one sensing measurement session operation can correspond to one or more sensing measurement setup operations, and one sensing measurement setup operation can correspond to one or more sensing measurement events.

According to this embodiment, the WLAN sensing measurement determined by the AP may include one or more sensing measurement sessions, each sensing measurement session may correspond to one or more sensing measurement setup operations, and each sensing measurement setup operation may correspond to one or more sensing measurement events. The information carried in the polling frame (first information field) can identify one or more sensing measurement session operations, sensing measurement setup operations corresponding to each sensing measurement session, and one or more sensing measurement events corresponding to each sensing measurement setup operation, thereby detecting the availabilities of stations participating in each sensing measurement event under each sensing measurement setup operation in the identified sensing measurement session operations.

For example, the first information field (the common information field of the polling frame) may have the format shown in Table 3 below.

**Table 3**

| |
|---|
| sensing session ID1 |
| measurement setup ID1 |
| sensing measurement instance ID11 |
| sensing measurement instance ID12 |
| ...... |
| sensing session ID2 |
| measurement setup ID2 |
| sensing measurement instance ID21 |
| sensing measurement instance ID22 |
| ...... |

In Table 3, at least one sensing measurement session identifier can be represented as the sensing session ID (sensing session ID1, sensing session ID2, etc.) in Table 3, at least one sensing measurement setup identifier corresponding to the sensing session ID "sensing session ID1" can be represented as the measurement setup ID (measurement setup ID1, etc.) in Table 3, and at least one sensing measurement setup identifier corresponding to the sensing session ID "sensing session ID2" can be represented as the measurement setup ID (measurement setup ID2, etc.) in Table 3, and an identifier of at least one sensing measurement event corresponding to the measurement setup ID (measurement setup ID1) can be represented as the sensing measurement instance ID11, the sensing measurement instance ID12, etc. in Table 3, and the identifier of at least one sensing measurement event corresponding to the measurement setup ID "measurement setup ID2" can be represented as sensing measurement instance ID21, sensing measurement instance ID22, etc. in Table 3.

The embodiments of Table 2 above can be understood as: in the case where the polling frame only identifies one sensing measurement session identifier, the sensing measurement session identifier in Table 3 can be omitted.

Continuing with reference to Fig. 4, the method of determining the polling frame may include determining a second information field (step 420), wherein the second information field may be associated with all station devices participating in WLAN sensing measurement. In other words, the information in the polling frame in step 310 may also include a second information field associated with the station device. For example, the second information field may include information of all station devices participating in WLAN sensing measurement. As a non-restrictive embodiment, the second information field may be the station information (STA info) field in the polling frame, and for the convenience of description below, the second information field and the station information field may be exchanged.

According to embodiments of the present disclosure, the second information field may include an identifier for each station device, and a resource unit (RU) used by each station device to respond to the polling frame, such as 26-tone, 52-tone, 106-tone, and so on. For example, the second information field (station information field) may have the format shown in Table 4 below.

**Table 4**

| | | | | | | |
|---|---|---|---|---|---|---|
| AID1 | RU1 | AID2 | RU2 | UID1 | RU3 | ...... |

In Table 4, the identifier of each station device can be represented as AID or UID (e.g. AID1, AID2, UID1, etc.). AID can indicate that the station device identified by this identifier has established an association connection with the AP. For example, AID can be assigned by STA during the association process with the AP. UID can indicate that the station device identified by this identifier has not established an association connection with the AP. For example, UID can be assigned by the AP during the WLAN sensing measurement setup process with STA.

As described above with reference to Fig. 2, station devices can respond to polling frames using CTS-to-self frames. Then, in the second information field (station information field) shown in Table 4, resource units (such as RU1, RU2, RU3, etc.) used by each station device to send the CTS-to-self frame can be identified. For example, resource units (RUs) can represent subcarriers (tones) of different sizes or types.

It will be understood that the contents and quantities shown in Tables 1 to 4 are only illustrative and not a limitation of the present disclosure, and may vary according to different embodiments.

Furthermore, although Fig. 4 illustrates that the method for determining the polling frame in step 310 may include both step 410 and step 420, this disclosure is not limited to this. For example, in the case of implicit identification, the first information field (common information field) shown in Tables 1 to 3 determined in step 410 can be omitted. For example, the method of determining the polling frame may also include determining the receiver address (not shown), in other words, the information in the polling frame in step 310 may also include the receiver address.

In an embodiment of the present disclosure, in the case where the first information field of the polling frame includes at least one sensing measurement setup identifier, the receiver address may be a broadcast address. For example, in the case where the WLAN sensing measurement determined by the AP includes one or more sensing measurement establishment setup processes, the polling frame can be sent in a broadcast manner.

In another embodiment of the present disclosure, in the case where the first information field of the polling frame does not include at least one sensing measurement setup identifier, the receiver address may be a multicast address or a broadcast address. For example, in the case where the WLAN sensing measurement determined by the AP includes one or more sensing measurement events belonging to a specific sensing measurement setup, the polling frame can be sent in a multicast or broadcast manner.

According to step 310 of Fig. 3 and steps 410 and 420 of Fig. 4 in embodiments of the present disclosure, the format of the polling frame is defined.

For example, the polling frame may include a common information field (first information field) and a station information field (second information field). In the common information field, it can include an identifier (sensing measurement instance ID) of the sensing measurement event, which identifies all STAs participating in WLAN sensing measurement determined by the AP to be polled and participate in subsequent sensing measurements. In addition, each STA identifier and its corresponding resource unit (RU) for sending CTS-to-self can be included in the station information field, where each STA identifier can be identified as AID or UID, where AID is assigned by STA during establishing the association with AP, and UID is assigned by AP during the sensing measurement setup process with STA. In addition, since the polling frame is only used to detect whether STA is awake (i.e. available), the number of spatial streams (NSS) subfield is not included in the common information field or station information field.

For example, the polling frame may contain a sensing measurement setup ID in the common information field, and in this case, may contain the identifier of multiple sensing measurement events (measurement instance ID), to identify multiple stations belonging to each measurement setup ID.

For example, due to the possibility of redundancy in the measurement setup ID in the polling frame, i.e., STA may have established sensing measurements with multiple APs (or STA may have participated in different sensing measurements), it may also include a sensing session ID in the common information field, and in this case, it may also include multiple measurement setup IDs.

For example, the receiver address (RA) in the polling frame may be a broadcast address (in the presence of a measurement setup ID), or RA may be a multicast address or a broadcast address (in the absence of a measurement setup ID).

Referring to Fig. 3, in step 320, a polling frame is sent.

For example, step 320 may include: sending the polling frame at a specific bandwidth. According to embodiments of the present disclosure, the specific bandwidth used for sending the polling frame may be different from the bandwidth used in the WLAN sensing measurement process. In other words, since the polling frame only detects the presence of STA, the transmission bandwidth of the polling frame may not be the same as the bandwidth of subsequent sensing measurement. For example, the specific bandwidth used to send the polling frame may be the elementary bandwidth, such as the elementary 20MHz bandwidth. For example, the bandwidth used in the WLAN sensing measurement process (such as the bandwidth used in the measurement and feedback stages shown in Fig. 2) may be greater than or equal to the specific bandwidth used to send the polling frame. Specifically, the bandwidth used in the WLAN sensing measurement process (such as the bandwidth used in the measurement and feedback stages described with reference to Fig. 2) may be, for example, but not limited to, 40 MHz, 80 MHz, 160 MHz, or 320 MHz.

For example, step 320 may include sending the polling frame periodically or one time at a specific time point, wherein the specific time point is determined during the WLAN sensing measurement setup process between the access point device and the station device.

In the communication methods according to embodiments of the present disclosure described with reference to Figs. 3 and 4 as well as Tables 1 to 4, the format and transmission method of the polling frame have been defined, and can be improved and adapted to the needs of WLAN sensing.

The initiator (AP) can detect the availabilities (or presence) of all STAs participating in WLAN sensing measurement by sending the polling frame, while the responder (STA) can receive the polling frame and respond to the polling frame when it is available, and can continue with subsequent measurement and feedback stages.

The following will refer to Fig. 5 to describe a communication method suitable for the responder (station device) according to an exemplary embodiment.

Referring to Fig. 5, in step 510, the polling frame may be received from the access point device, wherein the polling frame may include information for detecting the availabilities of all station devices participating in WLAN sensing measurement determined by the access point device.

According to an embodiment of the present disclosure, the information carried in the polling frame may include a first information field associated with the WLAN sensing measurement.

According to an embodiment of the present disclosure, the first information field may include an identifier used to identify at least one sensing measurement event participated by the station device.

According to an embodiment of the present disclosure, the first information field may include at least one sensing measurement setup identifier, and in this case, the first information field may further include an identifier of at least one sensing measurement event corresponding to each sensing measurement setup identifier.

According to an embodiment of the present disclosure, the first information field may include at least one sensing measurement session identifier, and in this case, the first information field may further include at least one sensing measurement setup identifier corresponding to each sensing measurement session identifier and an identifier of at least one sensing measurement event corresponding to each sensing measurement setup identifier.

According to an embodiment of the present disclosure, the information carried in the polling frame may further include a second information field associated with the station device.

According to an embodiment of the present disclosure, the second information field may include an identifier of each station device, and a resource unit used by each station device to respond to the polling frame.

The embodiments described above with reference to step 310 and the embodiments described in Tables 1 to 4 can be applied here. To avoid redundancy, repeated descriptions are omitted here.

According to an embodiment of the present disclosure, the information carried in the polling frame may further include a receiver address. In case that the first information field includes at least one sensing measurement setup identifier, the receiver address may be a broadcast address. In case that the first information field does not include the at least one sensing measurement setup identifier, the receiver address may be a multicast address or a broadcast address.

According to an embodiment of the present disclosure, receiving the polling frame from the access point device in step 510 may include receiving the polling frame at a specific bandwidth. The specific bandwidth may be different from the bandwidth used in the WLAN sensing measurement process. For example, the specific bandwidth may be an elementary 20MHz bandwidth.

According to an embodiment of the present disclosure, receiving the polling frame from the access point device in step 510 may include receiving the polling frame periodically or one time at a specific time point, wherein the specific time point is determined during a WLAN sensing measurement setup process between the access point device and the station device.

In step 520, a response frame is sent for the polling frame. According to embodiments of the present disclosure, the response frame may be, for example, but not limited to, a CTS-to-self frame. For example, the station device can use the resource unit (RU) of the corresponding station device identified in the polling frame to send the CTS-to-self frame. In addition, when a station device that receives the polling frame sends the CTS-to-self frame, it can indicate that the station device is available and can participate in subsequent measurement and feedback stages.

Fig. 6 is a block diagram illustrating a communication device according to an exemplary embodiment. The communication device 600 in Fig. 6 may include a processing module 610 and a transceiver module 620. In one embodiment of the present disclosure, the communication device 600 shown in Fig. 6 may be applied to the initiator (access point device). In another embodiment of the present disclosure, the communication device 600 shown in Fig. 6 may be applied to the responder (station device).

In the case where the communication device 600 shown in Fig. 6 can be applied to the initiator (access point device), the processing module 610 can be configured to determine a polling frame, wherein the polling frame may include information for detecting availabilities of all station devices participating in WLAN sensing measurement determined by the access point device. The transceiver module 620 can be configured to send the polling frame. That is to say, the communication device 600 shown in Fig. 6 can execute the communication method described with reference to Figs. 3 and 4, and the embodiments described with reference to Tables 1 to 4 can be applied to this. To avoid redundancy, repeated descriptions are omitted here.

In the case where the communication device 600 shown in Fig. 6 can be applied to the responder (station device), the transceiver module 620 can be configured to receive a polling frame from the access point device, wherein the polling frame may include information for detecting the availabilities of all station devices participating in WLAN sensing measurement determined by the access point device. The processing module 610 can be configured to control the transceiver module based on the polling frame to send a response frame for the polling frame. That is to say, the communication device 600 shown in Fig. 6 can execute the communication method described with reference to Fig. 5, and the embodiments described with reference to Tables 1 to 4 can be applied here. To avoid redundancy, repeated descriptions are omitted here.

It will be understood that the communication device 600 shown in Fig. 6 is only exemplary, and the embodiments of the present disclosure are not limited to this. For example, the communication device 600 may also include other modules, such as memory modules, etc. In addition, the various modules in the communication device 600 can be combined into more complex modules or divided into more individual modules.

According to the communication method and communication device disclosed herein, the format and transmission method of the polling frame have been defined, and can be improved and adapted to the needs of WLAN sensing. In addition, the communication method and communication device according to embodiments of the present disclosure can improve the efficiency of spectrum utilization, while also meeting the delay requirements of WLAN sensing measurement.

Based on the same principle as the methods provided in embodiments of the present disclosure, embodiments of the present disclosure also provide an electronic device. The electronic device includes a processor and a memory. The memory stores machine readable instructions (also known as "computer programs"). The processor is configured to execute the machine readable instructions to implement the methods described in Figures 3 to 5.

Embodiments of the present disclosure also provide a computer readable storage medium, on which a computer program is stored. When the computer program is executed by a processor, the method described in Figures 3 to 5 is implemented.

In exemplary embodiments, the processor may be used to implement or execute various exemplary logical blocks, modules, and circuits described in conjunction with the present disclosure, such as a CPU (Central Processing Unit), general-purpose processor, DSP (Digital Signal Processor), ASIC (Application Specific Integrated Circuit), FPGA (Field Programmable Gate Array), or other programmable logic devices, transistor logic devices, hardware components, or any combination thereof. The processor may also be a combination of computing functions, such as a combination of one or more microprocessors, a combination of DSP and microprocessors, etc.

In exemplary embodiments, the memory may be, for example, ROM (Read Only Memory), RAM (Random Access Memory), EEPROM (Electrically Erasable Programmable Read Only Memory), CD-ROM (Compact Disc Read Only Memory) or other optical disc storage, optical disc storage (including compressed discs, laser discs, optical discs, digital universal discs, Blu ray discs, etc.), disk storage media or other magnetic storage devices, or any other medium that can be used for carrying or storing program code in the form of instructions or data structures and that can be accessed by a computer, but not limited to this.

It should be understood that although the various steps in the flowchart of the attached drawings are displayed sequentially according to the arrows, these steps are not necessarily executed in the order indicated by the arrows. Unless explicitly stated in this article, the execution of these steps does not have strict order restrictions and can be carried out in other orders. In addition, at least a portion of the steps in the flowchart of the attached drawings may include multiple sub steps or stages, which may not necessarily be completed at the same time, but may be executed at different time, and their execution order may not necessarily be sequential, but may rotate or alternate with at least a portion of other steps or sub steps or stages.

Although certain embodiments of the present disclosure have been illustrated and described, those skilled in the art will understand that various changes in form and details may be made without departing from the scope of the present disclosure. Therefore, the scope of this disclosure should not be limited to embodiments, but should be limited by the accompanying claims and their equivalents.

## Claims

1. A communication method, comprising:
determining a polling frame, wherein the polling frame comprises information for detecting availabilities of all station devices participating in wireless local area network (WLAN) sensing measurement determined by an access point device; and
sending the polling frame.

2. The communication method of claim 1, wherein the information comprises a first information field associated with the WLAN sensing measurement.

3. The communication method of claim 2, wherein the first information field comprises an identifier used to identify at least one sensing measurement event participated by the station device.

4. The communication method of claim 2, wherein the first information field comprises at least one sensing measurement setup identifier, and
wherein the first information field further comprises an identifier of at least one sensing measurement event corresponding to each sensing measurement setup identifier.

5. The communication method of claim 2, wherein the first information field comprises at least one sensing measurement session identifier, and
wherein the first information field further comprises at least one sensing measurement setup identifier corresponding to each sensing measurement session identifier and an identifier of at least one sensing measurement event corresponding to each sensing measurement setup identifier.

6. The communication method of claim 2, wherein the information further comprises a second information field associated with the station device.

7. The communication method of claim 6, wherein the second information field comprises an identifier of each station device, and a resource unit used by each station device to respond to the polling frame.

8. The communication method of any of claims 2-7, wherein the information further comprises a receiver address,
wherein, in case that the first information field comprises at least one sensing measurement setup identifier, the receiver address is a broadcast address,
wherein, in case that the first information field does not comprise the at least one sensing measurement setup identifier, the receiver address is a multicast address or a broadcast address.

9. The communication method of claim 1, wherein sending the polling frame comprises:
sending the polling frame at a specific bandwidth.

10. The communication method of claim 9, wherein the specific bandwidth is different from a bandwidth used in a WLAN sensing measurement process.

11. The communication method of claim 9 or 10, wherein the specific bandwidth is an elementary bandwidth of 20MHz.

12. The communication method of claim 1 or any of claims 9-11, wherein sending the polling frame comprises:
sending the polling frame periodically or one time at a specific time point,
wherein the specific time point is determined during a WLAN sensing measurement setup process between the access point device and the station device.

13. A communication method, comprising:
receiving a polling frame from an access point device, wherein the polling frame comprises information for detecting availabilities of all station devices participating in wireless local area network (WLAN) sensing measurement determined by the access point device; and
sending a response frame for the polling frame.

14. The communication method of claim 13, wherein the information comprises a first information field associated with the WLAN sensing measurement.

15. The communication method of claim 14, wherein the first information field comprises an identifier used to identify at least one sensing measurement event participated by the station device.

16. The communication method of claim 14, wherein the first information field comprises at least one sensing measurement setup identifier,
wherein the first information field further comprises an identifier of at least one sensing measurement event corresponding to each sensing measurement setup identifier.

17. The communication method of claim 14, wherein the first information field comprises at least one sensing measurement session identifier,
wherein the first information field further comprises at least one sensing measurement setup identifier corresponding to each sensing measurement session identifier and an identifier of at least one sensing measurement event corresponding to each sensing measurement setup identifier.

18. The communication method of claim 14, wherein the information further comprises a second information field associated with the station device.

19. The communication method of claim 18, wherein the second information field comprises an identifier of the station device, and a resource unit used by the station device to send the response frame.

20. The communication method of any of claims 14-19, wherein the information further comprises a receiver address,
wherein, in case that the first information field comprises at least one sensing measurement setup identifier, the receiver address is a broadcast address, and
wherein, in case that the first information field does not comprise the at least one sensing measurement setup identifier, the receiver address is a multicast address or a broadcast address.

21. The communication method of claim 13, wherein receiving the polling frame from the access point device comprises:
receiving the polling frame at a specific bandwidth.

22. The communication method of claim 21, wherein the specific bandwidth is different from a bandwidth used in a WLAN sensing measurement process.

23. The communication method of claim 21 or 22, wherein the specific bandwidth is an elementary bandwidth of 20MHz.

24. The communication method of claim 13 or any of claims 21-23, wherein receiving the polling frame from the access point device comprises:
receiving the polling frame periodically or one time at a specific time point,
wherein the specific time point is determined during a WLAN sensing measurement setup process between the access point device and the station device.

25. A communication device, comprising:
a processing module, configured to determine a polling frame, wherein the polling frame comprises information for detecting availabilities of all station devices participating in wireless local area network (WLAN) sensing measurement determined by an access point device; and
a transceiver module, configured to send the polling frame.

26. A communication device, comprising:
a transceiver module, configured to receive a polling frame from an access point device, wherein the polling frame comprises information for detecting availabilities of all station devices participating in wireless local area network (WLAN) sensing measurement determined by the access point device; and
a processing module, configured to control the transceiver module based on the polling frame to send a response frame for the polling frame.

27. An electronic device, comprising a memory, a processor, and a computer program stored on the memory and executable by the processor, wherein the processor implements the method of any of claims 1-12 or any of claims 13-24 when executing the computer program.

28. A computer readable storage medium, stored with a computer program, which when executed by a processor, implements the method any of claims 1-12 or any of claims 13-24.
